# EUROPÄISCHE PATENTSCHRIFT

(11) **EP 1 343 379 B1**
(45) Veröffentlichungstag und Bekanntmachung des Hinweises auf die Patenterteilung: **13.04.2005**
(21) Anmeldenummer: 01271898.7
(22) Anmeldetag: 21.12.2001
(51) Int. Cl.: A21B 5/02, A21B 1/46

(54) **BACKOFEN ZUR HERSTELLUNG VON GEBACKENEN FORMKÖRPERN**
BAKING OVEN FOR PRODUCING BAKED SHAPED BODIES
FOUR DE BOULANGERIE POUR LA PRODUCTION DE CORPS MOULES CUITS

(30) Priorität: 22.12.2000 AT 21402000
(43) Veröffentlichungstag der Anmeldung: 17.09.2003
(73) Patentinhaber: FRANZ HAAS WAFFEL-UND KEKSANLAGEN-INDUSTRIE GMBH, 1210 Wien (AT)
(72) Erfinder: HAAS, Franz, A-1210 Wien (AT); HAAS, Johann, A-3400 Klosterneuburg (AT); OBERMAIER, Fritz, A-3500 Krems (AT)
(74) Vertreter: Puchberger, Rolf, Dipl. Ing.
(86) Internationale Anmeldenummer: PCT/AT2001/000403
(87) Internationale Veröffentlichungsnummer: WO 2002/051249

(56) Entgegenhaltungen:
- DE-B- 1 076 052
- FR-A- 2 651 093
- US-A- 3 093 062
- US-A- 4 208 441

## Beschreibung

### Gebiet der Erfindung:

Die Erfindung bezieht sich auf einen Backofen zur Herstellung von gebackenen Formkörpern. Dieser Backofen besitzt eine Eingabestation für die Backmasse, eine Ausgabestation für die gebackenen Formkörper, einen langgestreckten Backraum, eine von der Eingabestation durch den Backraum zur Ausgabestation führende Backstrecke sowie in getrennten Umlaufbahnen in Längsrichtung des Backofens gegensinnig umlaufende, obere und untere Backplatten, die die Backstrecke in gleicher Richtung durchlaufen und dabei paarweise aufeinanderliegend die Backformen für die zu backenden Formkörper bilden.

### Stand der Technik

Aus der DE-PS 464 630 und der GB-PS 226 793 sind Waffelbackmaschinen zur Herstellung von flachen, rechteckigen Waffeln bekannt, die in den eine U-förmige Backstrecke durchlaufenden Waffelbackformen gebacken werden, die jeweils von einer oberen Backplatten und einer unteren Backplatte gebildet werden. Bei diesen Backmaschinen ist die Teig-Eingabestation an der Vorderseite oberhalb der Waffel-Ausgabestation angeordnet und die entlang ihren beiden horizontalen Abschnitten jeweils von unten beheizte U-förmige Backstrecke führt von der Eingabestation durch das Innere der Backmaschine zur Ausgabestation.

Die U-förmige Backstrecke erstreckt sich entlang der Außenseite einer endlosen, inneren Backplattenkette, deren Backplatten die unteren Backplatten der Waffelbackformen bilden. Die umlaufende Backplattenkette befördert ihre Backplatten von der oberen Eingabestation durch die U-förmige Backstrecke nach unten zur unteren Ausgabestation und von dieser über die an der Vorderseite der Backmaschine angeordnete Umlenktrommel der Backplattenkette zurück nach oben zur oberen Eingabestation.

Die U-förmige Backstrecke erstreckt sich auch entlang der U-förmigen Innenbahn einer äußeren, endlosen Backplattenkette, deren Backplatten die oberen Backplatten der Waffelbackformen bilden. Die umlaufende äußere Backplattenkette befördert ihre Backplatten in ihrer U-förmigen Innenbahn von der oberen Eingabestation entlang der Außenseite der inneren Backplattenkette und durch die U-förmige Backstrecke hindurch nach unten zur unteren Ausgabestation. Am unteren Ende der U-förmigen Backstrecke wird die äußere Backplattenkette über ihre an der Ausgabestation angeordnete, untere Umlenktrommel nach unten in ihre U-förmige Außenbahn umgelenkt. Diese führt unterhalb der Backstrekke entlang der Unterseite der Backmaschine nach hinten, entlang der Rückseite der Backmaschine nach oben und entlang der Oberseite der Backmaschine oberhalb der Backstrekke zurück nach vorne zum oberen Anfang der U-förmigen Backstrecke. An der Vorderseite der Backmaschine wird die äußere Backplattenkette an ihrer oberhalb der Eingabestation angeordneten, oberen Umlenktrommel nach unten zum Beginn ihrer U-förmigen Innenbahn umgelenkt.

Bei diesen Backmaschinen wird jede Waffelbackform im oberen horizontalen Abschnitt der U-förmigen Backstrecke nur an ihrer unteren Backplatte beheizt. Beim Passieren der hinteren Umlenkung der Backstrecke wird die Waffelbackform auf den Kopf gestellt und im anschließenden unteren horizontalen Abschnitt der Backstrecke wird die Waffelbackform nur an ihrer, jetzt unten liegenden, oberen Backplatte beheizt.

Bei diesen Backmaschinen enthält die äußere Backplattenkette etwa doppelt so viele Backplatten wie die innere Backplattenkette. Bei der äußeren Backplattenkette kühlen die entlang der langen Außenbahn zurückgeführten Backplatten stärker ab, als die nur über die vordere Umlenktrommel zurückgeführten Backplatten der inneren Backplattenkette. In der U-förmigen Backstrecke werden die Backplatten der inneren Backplattenkette nur im oberen horizontalen Abschnitt der Backstrecke beheizt und die Backplatten der äußeren Backplattenkette werden nur im unteren horizontalen Abschnitt der Backstrecke beheizt.

Der unterschiedliche Verlauf der beiden Backplattenketten und die auf unterschiedliche Teile der U-förmigen Backstrecke beschränkte Beheizung ihrer Backplatten führt zu großen Unterschieden bei den unvermeidlichen, wärmebedingten Längenänderungen der beiden Backplattenketten. Die unterschiedlichen, wärmebedingten Längenänderungen der beiden Backplattenketten können bei den Waffelbackformen zu einer unerwünschten, gegenseitigen Verschiebung ihrer Backplatten führen, wodurch das sich an der oberen Backplatte ausbildende Waffelmuster der Waffeloberseite gegenüber dem sich an der unteren Backplatte ausbildenden Waffelmuster der Waffelunterseite verschoben wird.

Bei diesen Backmaschinen entstehen große Temperaturunterschiede bei den zur Eingabestation zurückgeführten oberen und unteren Backplatten der Waffelbackformen. Am Beginn der Backstrecke wird eine relativ stark abgekühlte, obere Backplatte zu einer weniger stark abgekühlten und bereits von unten beheizten, unteren Backplatte nach unten geklappt. Dabei kommt der sich auf der unteren Backplatte ausbreitende Waffelteig im vorderen Drittel der Backplatte etwas früher in Kontakt mit der etwas kühleren oberen Backplatte als im hinteren Drittel. Dies führt zu einer örtlich unterschiedlichen Erwärmung des zwischen den beiden Backplatten eingeschlossenen Waffelteiges. Dadurch kann eine unerwünschte, ungleichmäßige Färbung der Oberfläche der gebackenen Waffeln entstehen.

Bei diesen Backmaschinen verursacht die äußere Backplattenkette mit ihrer großen Länge und ihrer U-förmigen Außenbahn hohe Kosten für die zusätzlichen Backplatten und die zusätzlichen Umlenktrommeln an der Rückseite der Backmaschine. Der U-förmige Verlauf der Backstrecke macht eine Steigerung der Leistungsfähigkeit der Backmaschine durch eine deutliche Verlängerung ihrer Backstrecke unwirtschaftlich und erzeugt zusätzliche Probleme. Für eine Verlängerung der Backstrecke müßten bei der äußeren Backplattenkette stets doppelt so viele Backplatten hinzugefügt werden wie bei der inneren Backplattenkette. Dies würde sowohl bei den unvermeidlichen, wärmebedingten Längenänderungen der beiden Backplattenketten, als auch bei den Temperaturen der Backplatten am Beginn der Backstrecke jeweils die bereits bestehenden Unterschiede noch vergrößern. Bei einer Verlängerung der Backstrecke müßte auch die Umlaufgeschwindigkeit der beiden Backplattenketten vergrößert werden, damit auch bei verlängerter Backstrecke die für die Waffeln vorgesehene Backzeit mit der Durchlaufzeit der Waffelbackformen übereinstimmt. Die fünffache Umlenkung der äußeren Backplattenkette läßt aber nur eine begrenzte Erhöhung ihrer Umlaufgeschwindigkeit zu.

Aus der DE-OS 29 32 156 ist eine Anlage zum gleichzeitigen Herstellen von kreisförmigen, kleeblattförmigen und herzförmigen Oblaten in drei nebeneinander angeordneten Längsreihen bekannt. In dieser Anlage läuft ein als Schablone ausgebildetes, endloses Stahlband um, das in drei Längsreihen nebeneinander angeordnete, der jeweiligen Oblatenform entsprechende Ausstanzungen besitzt, in denen die Oblaten entstehen und haften bleiben, bis sie durch die von der hinteren Umlenktrommel des Stahlbandes abstehenden, der jeweiligen Oblatenform entsprechenden und in die Ausstanzungen des Stahlbandes eingreifenden Auswerfernocken aus den Ausstanzungen des Stahlbandes herausgedrückt werden.

In dieser Anlage läuft das Stahlband in seinem oberen, horizontalen Abschnitt zwischen zwei übereinander angeordneten Gehäusen hindurch, in denen jeweils drei endlose Formenketten nebeneinander angeordnet sind, die jeweils aus gelenkig miteinander verbundenen Backformteilen bestehen und oberhalb bzw. unterhalb einer Längsreihe von Ausstanzungen umlaufen. In den von dem Stahlband jeweils abgewandten, äußeren Abschnitten der Formenketten werden die Backformteile aufgeheizt. In den dem Stahlband jeweils zugewandten, inneren Abschnitten der Formenketten decken die Backformteile die Ausstanzungen der betreffenden Längsreihe an der Ober- bzw. Unterseite des Stahlbandes ab.

In dieser Anlage werden die Teigportionen von stationären Dressierdüsen in die Ausstanzungen des umlaufenden Stahlbandes eingebracht, während die Ausstanzungen an ihren Unterseiten durch die heißen Backformteile der umlaufenden, unteren Formenketten abgedeckt sind und bevor die Ausstanzungen an ihren Oberseiten durch die heißen Backformteile der umlaufenden, oberen Formenketten abgedeckt werden. In den dann oben und unten jeweils durch heiße Backformteile abgedeckten Ausstanzungen entstehen die Oblaten, die mit ihren Rändern an den Rändern der Ausstanzungen haften bleiben, wenn die Backformteile von ihren Formenketten von der Oberseite bzw. Unterseite des Stahlbandes abgehoben werden. Das umlaufende Stahlband befördert die fertigen Oblaten, die in seinen Ausstanzungen haften geblieben sind, zu der an der hinteren Umlenktrommel des Stahlbandes angeordneten Ausgabestation, wo die Auswerfernocken in die Ausstanzungen eingreifen und die Oblaten aus den Ausstanzungen nach oben herausdrücken.

Das mit den Ausstanzungen versehene Stahlband dient in dieser Anlage nicht nur als Schablone für die Herstellung der Oblaten, sondern auch als Transportband für die fertigen Oblaten, die in den Ausstanzungen des Stahlbandes verbleiben, während das Stahlband die Oblaten zuerst durch ein Dressierstation, in der Lebkuchenteigportionen auf den Oblaten abgesetzt werden, und dann durch eine Formstation transportiert, in der Formstempel auf die Lebkuchenteigportionen aufgedrückt werden, welche die Teigportionen in die gewünschte Form zu bringen und gleichzeitig über die jeweilige Oblate zu verteilen.

In dieser Anlage laufen die drei an der Oberseite des Stahlbandes nebeneinander angeordneten, oberen Formenketten gegensinnig zu den drei unterhalb des Stahlbandes nebeneinander angeordneten, unteren Formenketten um. Die einander zugewandten Abschnitte der oberen und unteren Formenketten sind jeweils durch das Stahlband von einander getrennt. Die Anlage weist drei nebeneinander angeordnete Längsreihen von Oblaten-Backformen auf, bei denen das Stahlband mit seinen Ausstanzungen den Hauptteil aller Oblaten-Backformen bildet, während die Backformteile jeder einzelnen Formenkette jeweils nur bei einer einzelnen Längsreihe von Oblaten-Backformen die oberen bzw. unteren Deckel der Oblaten-Backformen bilden.

### Zusammenfassung der Erfindung:

Aufgabe der Erfindung ist es, einen verbesserten Backofen anzugeben, bei dem die Backplatten beim Bilden der Backformen gleichmäßig aufeinandergesetzt werden und der eine einfache Erhöhung seiner Leistungsfähigkeit durch Verlängerung seiner Backstrecke bei gleichzeitiger Erhöhung der Umlaufgeschwindigkeit der Backplatten ermöglicht.

Als Lösung wird ein Backofen zur Herstellung von gebackenen Formkörpern vorgeschlagen, welcher eine Eingabestation, eine Ausgabestation, einen langgestreckten Backraum, eine von der Eingabestation durch den Backraum zur Ausgabestation führende Backstrecke und in getrennten Umlaufbahnen in Längsrichtung des Backofens gegensinnig umlaufende, obere und untere Backplatten besitzt, die die Backstrecke in gleicher Richtung durchlaufen und dabei paarweise aufeinanderliegend die Backformen für die zu bakkenden Formkörper bilden. Dieser Backofen ist erfindungsgemäß dadurch gekennzeichnet, daß eine von der Eingabestation bis zur Ausgabestation in einer Ebene verlaufende Backstrecke vorgesehen ist, daß die Backformen jeweils aus einer unteren Backplatte und aus einer auf deren Oberseite abgesetzten, oberen Backplatte bestehen, daß unterhalb der Backstreckenebene ein sich entlang der Umlaufbahn der unteren Backplatten erstreckender und die unteren Backplatten tragender, unterer Förderer angeordnet ist, der die Backformen von der Eingabestation durch die Backstrecke zur Ausgabestation transportiert, daß oberhalb der Backstreckenebene ein sich entlang der Umlaufbahn der oberen Backplatten erstreckender, oberer Förderer vorgesehen ist, der die oberen Backplatten jeweils hängend, im wesentlichen horizontal ausgerichtet und mit ihren Backflächen stets nach unten weisend transportiert, wobei der obere Förderer die im wesentlichen horizontal ausgerichteten oberen Backplatten am Beginn der Backstrecke zum Bilden der Backformen auf den unteren Backplatten absetzt und von den unteren Backplatten an der Ausgabestation zum Auflösen der Backformen wieder abhebt, und daß die oberen und unteren Backplatten einander gegenseitig zugeordnete Ausrichtelemente tragen, die beim Absetzen einer oberen Backplatte auf einer unteren Backplatte in Eingriff kommen und die obere Backplatte während ihres Absetzens auf die darunterliegende, untere Backplatte ausrichten.

Bei dem erfindungsgemäßen Backofen setzt der obere Förderer die von ihm hängend getragenen, oberen Backplatten am Beginn der Backstrecke auf den unteren Backplatten ab und läßt die auf den unteren Backplatten liegenden, oberen Backplatten los. Der untere Förderer transportiert die aus den unteren Backplatten und aus den auf diesen abgesetzten oberen Backplatten gebildeten Backformen durch die Backstrecke. Am Ende der Backstrecke übernimmt der obere Förderer die auf den unteren Backplatten abgesetzten, oberen Backplatten und hebt sie von den unteren Backplatten ab. Dabei werden die Backformen aufgelöst und die in ihnen gebackenen Formkörper werden aus den Backform ausgegeben bzw. entnommen. Vom Ende der Backstrecke weg transportiert der obere Förderer die oberen Backplatten jeweils im wesentlichen parallel zur Backstreckenebene ausgerichtet zurück zum Anfang der Backstrecke, wo er sie wieder auf den Backplatten des unteren Förderers absetzt und an diesen übergibt.

Bei dem erfindungsgemäßen Backofen werden die oberen Backplatten bei ihrer Übergabe an die Backplatten des unteren Förderers jeweils im wesentlichen parallel zur Backstreckenebene ausgerichtet auf die in der Backstreckenebene liegenden, unteren Backplatten abgesenkt. Dadurch wird bei jeder einzelnen Backform die nach unten weisende Backfläche der oberen Backplatte senkrecht zur Backstreckenebene auf die Oberseite der Teig- bzw. Backmasse aufgesetzt, die auf der nach oben weisenden Backfläche der unteren Backplatte liegt. Beim Absenken der oberen Backplatte kommen deren Ausrichtelemente mit den Ausrichtelementen der darunterliegenden, unteren Backplatte in Eingriff. Die absinkende, obere Backplatte richtet sich während ihres Absinkens selbsttätig gegenüber der unteren Backplatte aus. Die vom oberen Förderer losgelassene, obere Backplatte liegt dann in der durch die Ausrichtelemente der beiden Backplatten bestimmten Position auf der unteren Backplatte auf. Dieser Ausrichtvorgang wird bei jeder einzelnen Backform von den Ausrichtelementen ihrer Backplatten gesteuert. Beim Absetzen der oberen Backplatten auf den unteren Backplatten werden durch den jeweiligen Ausrichtvorgang auch geringfügige Längsverschiebungen der oberen Backplatten gegenüber den unteren Backplatte ausgeglichen, wie sie z.B. durch unterschiedliche, wärmebedingte Längenänderungen der beiden Förderer verursacht werden können.

Die erfindungsgemäße Ausbildung des Backofens erlaubt eine einfache Anpassung des Backofens an die jeweils gewünschte Leistung. Sowohl beim oberen Förderer als auch beim unteren Förderer kann die Anzahl der Backplatten durch lineares Verlängern des jeweiligen Förderers auf einfache Weise vermehrt und die Umlaufgeschwindigkeit der Backplatten an die verlängerte Backstrecke angepaßt werden, ohne dadurch zusätzliche Probleme zu verursachen.

Gemäß einem weiteren Merkmal der Erfindung kann vorgesehen sein, daß der obere Förderer in Längsrichtung des Backofens umlaufende Gehänge für die oberen Backplatten besitzt, daß die Gehänge jeweils aus einem Obergehänge und einem mit diesem lose gekoppelten Untergehänge bestehen, wobei die Obergehänge entlang einer in sich geschlossenen Bahn umlaufend und die Untergehänge an den oberen Backplatten befestigt sind, und daß die Umlaufbahn der Obergehänge entlang der Backstrecke zu den unteren Backplatten hin abgesenkt ist, wobei bei den auf den unteren Backplatten abgesetzten, oberen Backplatten jeweils die Untergehänge von den Obergehängen abgehoben sind.

Gemäß einem weiteren Merkmal der Erfindung können die Obergehänge an einer in Längsrichtung des Backofens umlaufenden Transportkette befestigt sein und in Querrichtung des Backofens horizontal ausgerichtete Tragelemente für den Eingriff mit den Tragelementen der Untergehänge besitzen.

Gemäß einem weiteren Merkmal der Erfindung kann der obere Förderer zwei Scharen von in Längsrichtung des Backofens parallel zueinander umlaufenden Gehängen besitzen und jede Gehängeschar an einer, in einer vertikalen Ebene umlaufenden, endlosen Transportkette befestigt sein.

Gemäß einem weiteren Merkmal der Erfindung kann der obere Förderer zwei Scharen von in Längsrichtung des Backofens parallel zueinander umlaufenden Gehängen besitzen, deren Untergehänge an den oberen Backplatten befestigt sind und deren Obergehänge an in Querrichtung des Backofens horizontal ausgerichteten Tragstangen angebracht sind, die an seitlichen Transportketten befestigt sind, die jeweils in einer vertikalen Ebene in Längsrichtung des Backofens umlaufen

Gemäß einem weiteren Merkmal der Erfindung können die Tragelemente der Obergehänge als horizontal ausgerichtete Tragbolzen ausgebildet sein, die von den Tragelementen der Untergehänge von oben übergriffen werden.

Gemäß einem weiteren Merkmal der Erfindung kann das Untergehänge eine vertikal ausgerichtete Tragplatte besitzen, in der eine seitlich offene Ausnehmung vorgesehen ist, an deren oberer Ausbuchtung das Tragelement des Untergehänge angeordnet ist, und das Tragelement des Obergehänges kann als horizontal ausgerichteter Tragbolzen ausgebildet sein, der mit vertikalem Bewegungsspiel in der seitlich offenen Ausnehmung des Untergehänges aufgenommen ist.

Gemäß einem weiteren Merkmal der Erfindung kann das Tragelement des Untergehänges als horizontal ausgerichteter Tragbolzen ausgebildet sein, der mit vertikalem Bewegungsspiel in einer seitlich offenen Ausnehmung des Obergehänges aufgenommen ist, und das Obergehänge kann eine vertikal ausgerichtete Tragplatte besitzen, in der eine seitlich offene Ausnehmung vorgesehen ist, an deren unterer Ausbuchtung das Tragelement des Obergehänges angeordnet ist.

Gemäß einem weiteren Merkmal der Erfindung können die Ausrichtelemente der oberen Backplatten als in Querrichtung des Backofens horizontal ausgerichtete Ausrichtbolzen ausgebildet sein, die beim Absenken der oberen Backplatten in die mit Einführschrägen versehenen, vertikale ausgerichteten Aufnahmeschlitze der Ausrichtelemente der unteren Backplatten eingreifen.

Nachstehend wird die Erfindung anhand der Zeichnungen näher erläutert.

### Kurze Beschreibung der Zeichnungen:

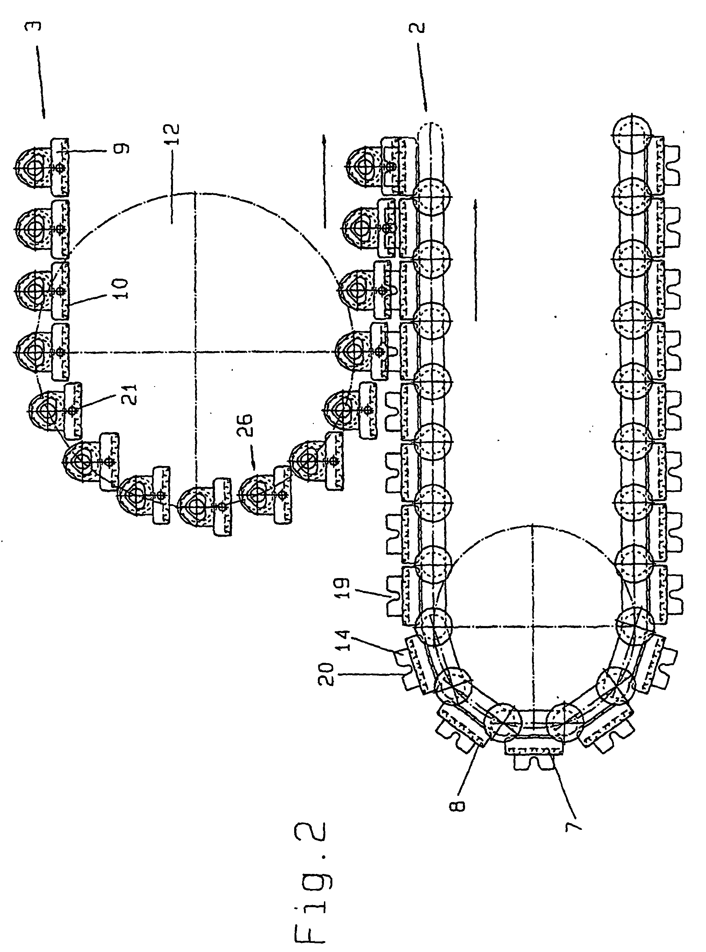

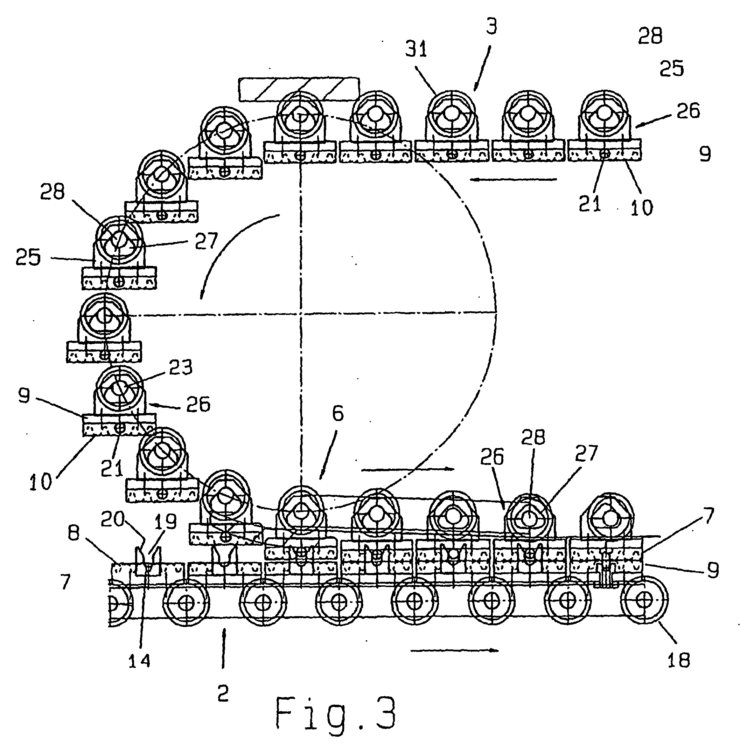

In den Zeichnungen zeigen: Fig. 1 in einer Seitenansicht schematisch einen erfindungsgemäßen Backofen, Fig. 2 in einer Seitenansicht schematisch das vorderen Ende eines erfindungsgemäßen Backofens, Fig. 3 in einer Seitenansicht schematisch den Beginn der Backstrecke eines erfindungsgemäßen Backofens, Fig. 4 eine Querschnitt durch einen erfindungsgemäßen Backofen, Fig. 5 schematisch eine erste Ausführungsform der Aufhängungen der oberen Backplatten, und Fig. 6 schematisch eine zweite Ausführungsform der Aufhängungen der oberen Backplatten.

### Beschreibung von Ausführungsbeispielen:

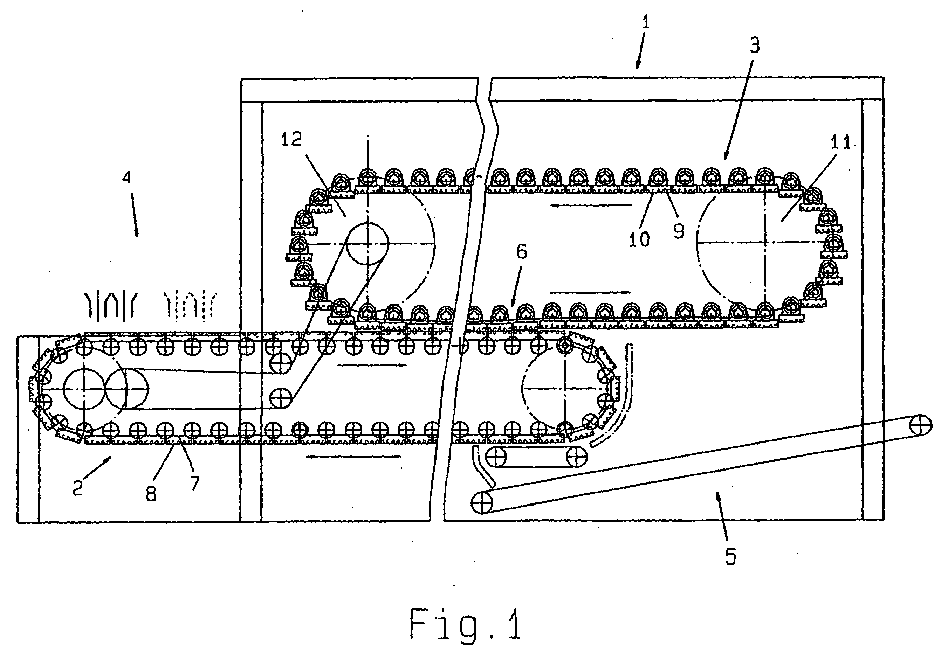

Fig. 1 zeigt einen langgestreckten Backofen 1, bei dem zwischen einem unteren Förderer 2 und einem oberen Förderer 3 eine von der vorderen Eingabestation 4 des Backofens 1 durch seinen langgestreckten Backraum hindurch bis zu seiner hinteren Ausgabestation 5 horizontal verlaufende Backstrecke 6 vorgesehen ist.

Der untere Förderer 2 befördert die unteren Backplatten 7 entlang ihrer Umlaufbahn durch den Backofen 1. Die unteren Backplatten 7 sind entlang ihrer Umlaufbahn mit ihren Backflächen 8 nach außen weisend in Längsrichtung des Backofens 1 hintereinander angeordnet. Der untere Förderer 2 befördert die unteren Backplatten 7 in seinem oberen Strang durch die Backstrecke 6 nach hinten zur Ausgabestation 5 und in seinem unteren Strang unterhalb der Backstrecke 6 nach vorne, zurück zur Eingabestation 4.

Die oberen Backplatten 9 sind entlang ihrer Umlaufbahn mit ihren Backflächen 10 nach unten weisend in Längsrichtung des Backofens 1 hintereinander angeordnet. Die oberen Backplatten 9 werden vom oberen Förderer 3 am Beginn seines unteren Stranges auf den unteren Backplatten 7 abgesetzt und vom unteren Förderer 2 durch die Backstrecke 6 nach hinten zur Ausgabestation 5 transportiert. Nach der Ausgabestation 5 werden die oberen Backplatten 9 wieder vom oberen Förderer 3 übernommen, der sie in seinem unteren Strang zu seiner hinteren Umlenkung 11 befördert und über diese hinweg in seinen, oberhalb der Backstrecke 6 angeordneten, oberen Strang. In diesem befördert der obere Förderer 3 die oberen Backplatten 9 jeweils hängend nach vorne zu seiner vorderen Umlenkung 12 und über diese zurück zum Beginn der Backstrecke 6.

Vor ihrem Eintritt in die Backstrecke 6 werden die horizontal ausgerichteten, oberen Backplatten 9 auf die horizontal ausgerichteten, unteren Backplatten 7 von oben aufgesetzt. Dabei kommt jeweils eine obere Backplatte 9 mit ihren seitlichen Ausrichtelementen 13 mit den seitlichen Ausrichtelementen 14 einer unteren Backplatte 7 in Eingriff und richtet sich selbsttätig gegenüber dieser aus. Dadurch werden die gegenseitigen Positionen der einander zugewandten Backflächen 8, 10 der beiden übereinanderliegenden Backplatten 7, 9 unabhängig von äußeren Einflüssen festgelegt.

Zum Herstellen der gebackenen Formkörper werden an der Eingabestation 4 des Backofens 1 über eine nicht dargestellte Beschickungsvorrichtung die für die Formkörper vorgesehenen Teigportionen in flüssiger Form oder als elastische, knetbare Teigstücke auf die Backflächen 8 der unteren Backplatten 7 aufgebracht. Beim Absetzen der oberen Backplatten 9 auf den unteren Backplatten 7 werden die Teigportionen in den dabei entstehenden und jeweils von den übereinanderliegenden Backplatten 7, 9 gebildeten Backformen eingeschlossen. Die Teigportionen werden in den Backformen durch die Backstrecke 6 transportiert, wobei durch den Backprozeß aus den Teigportionen gebackene Formkörper entstehen, bei denen die Gestalt ihrer Ober- und Unterseiten durch die Backflächen der übereinanderliegenden Backplatten 7, 9 bestimmt werden. An der Ausgabestation 5 des Backofens 1 werden die oberen Backplatten 9 wieder vom unteren Strang des oberen Förderers 3 übernommen und von den unteren Backplatten 7 abgehoben. Dabei werden die die gebackenen Formkörper enthaltenden Backformen aufgelöst. Die gebackenen Formkörper bleiben auf den unteren Backplatten 7 liegen und können von diesen beim Passieren der hinteren Umlenkung 15 des unteren Förderers 2 abgenommen werden.

Die oberen und unteren Backplatten 7, 9 können mit ihren einander zugewandten Backflächen 8, 10 jeweils mehrere nebeneinander angeordnete und durch Querstege getrennte Backformen bilden, sodaß zwischen zwei übereinanderliegenden Backplatten 7, 9 jeweils mehrere, nebeneinander angeordnete und die jeweilige Backform ausfüllende Formkörper gleichzeitig entstehen. Die oberen und unteren Backplatten 7, 9 können mit ihren einander zugewandten Backflächen 8, 10 auch jeweils einen einzelnen Formhohlraum bilden, in dem mehrere mit Abstand nebeneinander angeordnete Teigportionen zu getrennten Formkörpern gebacken werden.

Die unteren Backplatten 7 besitzen über ihre Backflächen 8 seitlich vorstehende Tragplatten 16, mit denen sie an den unteren Transportketten 18 befestigt sind, die entlang der Seitenwände 17 des Backofens 1 umlaufen. An diesen Tragplatten 16 sind die Ausrichtelemente 14 der unteren Backplatten 7 angebracht, wobei jedes Ausrichtelement 14 einen Längsschlitz 19 vorsieht, der zur Außenseite der Umlaufbahn der unteren Backplatten 7 hin offen ist und an seinem Eintrittsende mit Einführschrägen 20 versehen ist. Den zu beiden Seiten der Backflächen 8 der unteren Backplatten 7 angeordneten Längsschlitzen 19 sind zu beiden Seiten der Backflächen 10 der oberen Backplatten 9 angeordnete Ausrichtbolzen 21 zugeordnet. Diese Ausrichtbolzen 21 sind jeweils quer zur Laufrichtung der Backplatten 7, 9 horizontal ausgerichtet und bilden die seitlichen Ausrichtelemente 13 der oberen Backplatten 9.

Die oberen Backplatten 9 besitzen über ihre Backflächen 10 seitlich vorstehende Tragabschnitte 22, an deren äußeren, freien Enden vertikale Tragplatten 23 befestigt sind, die mit ihren unteren Endabschnitten 24 über die zugehörige, obere Backplatte 9 nach unten vorstehen. Die vertikalen Tragplatten 23 ragen jeweils mit einem oberen Abschnitt 25 über die zugehörige obere Backplatte 9 nach oben empor. Dieser obere Abschnitt 25 ist als der untere Teil eines zweiteiligen Gehänges 26 ausgebildet und enthält eine seitlich offene Ausnehmung 27 in die der als Tragbolzen 28 ausgebildete obere Teil des zweiteiligen Gehänges 26 eingreift. Dieser Tragbolzen 28 wird von einem seitlichen Abschnitt einer horizontalen Tragstange 29 des oberen Förderers 3 gebildet, dessen horizontale Tragstangen 29 in Längsrichtung des Backofens 1 umlaufen. Diese Tragstangen 29 sind mit ihren beiden seitlichen Endabschnitten 30 an den beiden oberen Transportketten 31 des Backofens 1 befestigt, die entlang der Seitenwände 17 des Backofens 1 umlaufen.

An jedem seitlichen Ende einer oberen Backplatte 9 bildet der obere Abschnitt 25 der vertikalen Tragplatte 23 das mit dieser oberen Backplatte 9 fest verbundene Untergehänge 25 eines zweiteiligen Gehänges 26, dessen Obergehänge 28 von dem in der seitlich offenen Ausnehmung 27 des Untergehänges 25 aufgenommenen Tragbolzen 28 gebildet wird, der auf einer umlaufenden Tragstange 29 des oberen Förderers 3 sitzt. Die seitlich offenen Ausnehmungen 27 der Untergehänge 25 sind dreieckig ausgebildet und mit abgerundeten Ecken versehen. Die in diese Ausnehmungen 27 eingreifenden Tragbolzen 28 der Obergehänge 28 besitzen jeweils einen deutlich kleineren Querschnitt als diese Ausnehmungen 27.

Die an den oberen Transportketten 31 befestigten Tragstangen 29 des oberen Förderers 3 bilden mit ihren als Tragbolzen ausgebildeten, seitlichen Abschnitten die Obergehänge der zweiteiligen Gehänge 26, deren Untergehänge an den oberen Backplatten 9 seitlich angebracht sind und jeweils eine den Tragbolzen 28 des Obergehänges mit Spiel umgreifende Ausnehmung 27 besitzen. Im oberen Strang des oberen Förderers 3 liegen die Untergehänge 25 auf den Obergehängen 28 auf und die oberen Backplatten 9 sind an den Tragstangen 29 des oberen Förderers 3 frei pendelnd aufgehängt. Entlang der Backstrecke 6 sind die Untergehänge 25 der oberen Backplatten 9 von den an den der Tragstangen 29 ausgebildeten Obergehängen 28 jeweils abgehoben.

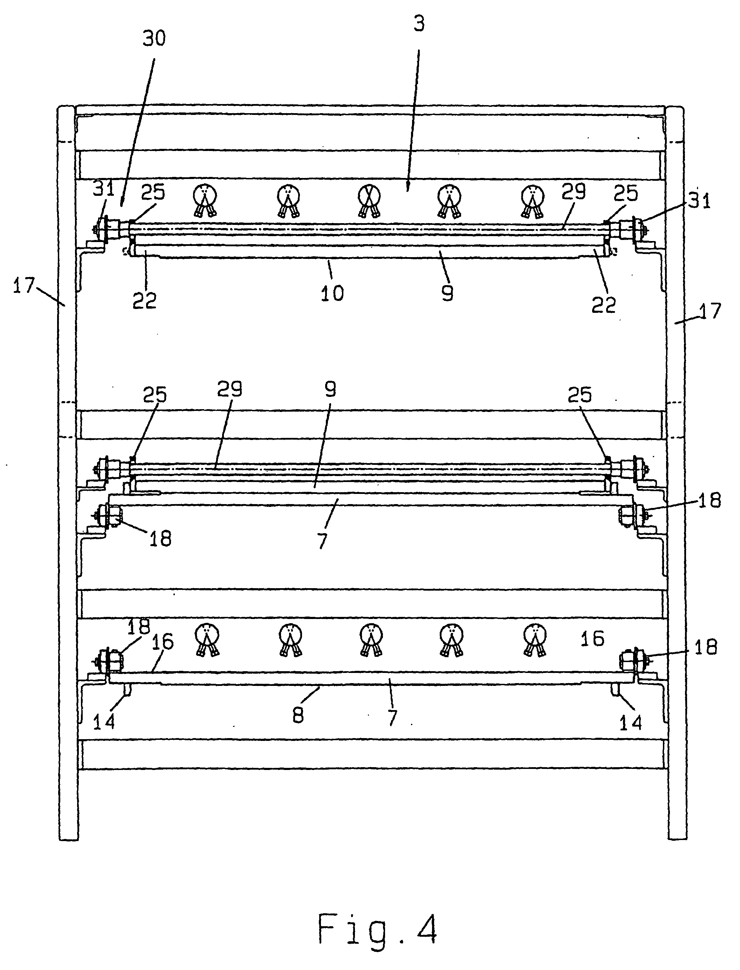

Fig. 4 zeigt einen Querschnitt durch den Backofen mit seinen beiden Seitenwänden 17 und dem oberhalb des unteren Förderers angeordneten oberen Förderer 3, dessen Gehänge in zwei nebeneinander angeordneten Scharen in Längsrichtung des Backofens parallel zueinander umlaufen und jeweils aus einem an einer oberen Backplatte 9 befestigten Untergehänge 25 und einem an einer horizontalen Tragstange 29 des oberen Förderers angebrachten Obergehänge bestehen.

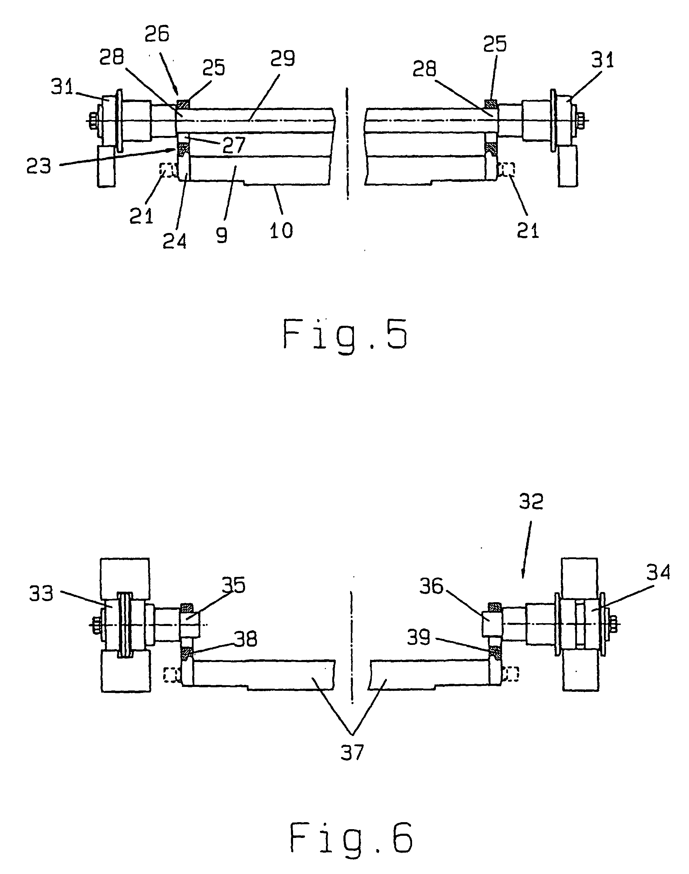

Fig. 6 zeigt den oberen Abschnitt eines oberen Förderers 32 mit zwei Scharen von Gehängen, die in zwei parallelen, vertikalen Ebenen nebeneinander umlaufen. Jeder Gehängeschar ist eine endlose Transportkette 33, 34 zugeordnet, deren Kettenglieder gegen Kippen gesichert sind und jeweils einen horizontal ausgerichteten Tragbolzen 35, 36 tragen. Diese Tragbolzen 35, 36 bilden jeweils das Obergehänge eines zweiteiligen Gehänges. An den beiden seitlichen Endabschnitten einer oberen Backplatte 37 sind die Untergehänge 38, 39 befestigt. Diese sitzen in dem in Fig. 6 gezeigten oberen Strang des oberen Förderers 32 auf den, von den Tragbolzen 35, 36 gebildeten Obergehängen auf, sodaß die obere Backplatte 37 im oberen Strang des oberen Förderers 32 auf den beiden Tragbolzen 35, 36 frei pendelnd aufgehängt ist. In dem in Fig. 6 nicht dargestellten unteren Strang des oberen Förderers 32 sind die an der oberen Backplatte 37 seitlich befestigten Untergehänge 38, 39 von den, von den Tragbolzen 35, 36 gebildeten Obergehängen abgehoben.

Die jeweils aus einem Obergehänge und einem Untergehänge bestehenden Gehänge sind zweiteilige Aufhängevorrichtungen, mit denen die oberen Backplatten oberhalb ihres Schwerpunktes im oberen Förderer jeweils pendeln aufgehängt sind, sodaß sie durch die Wirkung der Schwerkraft mit ihren Backflächen stets nach unten weisen und im wesentlichen horizontal bzw. parallel zur Backstreckenebene ausgerichtet durch ihre Umlaufbahn wandern.

## Patentansprüche

1. Backofen (1) zur Herstellung von gebackenen Formkörpern mit einer Eingabestation (4), einer Ausgabestation (5), einem langgestreckten Backraum, einer von der Eingabestation (4) durch den Backraum zur Ausgabestation (5) führenden Backstrecke (6) und mit in getrennten Umlaufbahnen in Längsrichtung des Backofens (1) gegensinnig umlaufenden, oberen und unteren Backplatten (7,9), die die Backstrecke (6) in gleicher Richtung durchlaufen und dabei paarweise aufeinanderliegend die Backformen für die zu backenden Formkörper bilden, ***dadurch gekennzeichnet*, daß** eine von der Eingabestation (4) bis zur Ausgabestation (5) in einer Ebene verlaufende Backstrecke (6) vorgesehen ist, daß die Backformen jeweils aus einer unteren Backplatte (7) und aus einer auf deren Oberseite abgesetzten, oberen Backplatte (9) bestehen, daß unterhalb der Backstreckenebene ein sich entlang der Umlaufbahn der unteren Backplatten (7) erstreckender und die unteren Backplatten (7) tragender, unterer Förderer (2) angeordnet ist, der die Backformen von der Eingabestation (4) durch die Backstrecke (6) zur Ausgabestation (5) transportiert, daß oberhalb der Backstreckenebene ein sich entlang der Umlaufbahn der oberen Backplatten (9,37) erstreckender, oberer Förderer (3,32) vorgesehen ist, der die oberen Backplatten (9,37) jeweils hängend, im wesentlichen horizontal ausgerichtet und mit ihren Backflächen (10,37a) stets nach unten weisend transportiert, wobei der obere Förderer (3) die im wesentlichen horizontal ausgerichteten oberen Backplatten (9) am Beginn der Backstrecke (6) zum Bilden der Backformen auf den unteren Backplatten (7) absetzt und von den unteren Backplatten (7) an der Ausgabestation (5) zum Auflösen der Backformen wieder abhebt, und daß die oberen und unteren Backplatten (7,9) einander gegenseitig zugeordnete Ausrichtelemente (13,14) tragen, die beim Absetzen einer oberen Backplatte (9) auf einer unteren Backplatte (7) in Eingriff kommen und die obere Backplatte (9) während ihres Absetzens auf die darunterliegende, untere Backplatte (9) ausrichten.

2. Backofen nach Anspruch 1, **dadurch gekennzeichnet, daß** der obere Förderer (3) in Längsrichtung des Backofens (1) umlaufende Gehänge (26) für die oberen Backplatten (9) besitzt, daß die Gehänge (26) jeweils aus einem Obergehänge (28) und einem mit diesem lose gekoppelten Untergehänge (25) bestehen, wobei die Obergehänge (28) entlang einer in sich geschlossenen Bahn in Längsrichtung des Backofens (1) umlaufen und die Untergehänge (25) an den oberen Backplatten (9) befestigt sind, und daß die Umlaufbahn der Obergehänge (28) entlang der Backstrecke (6) zu den unteren Backplatten hin (7) abgesenkt ist, wobei bei den auf den unteren Backplatten (7) abgesetzten, oberen Backplatten (9) jeweils die Untergehänge (25) von den Obergehängen (28) abgehoben sind.

3. Backofen nach Anspruch 2, **dadurch gekennzeichnet, daß** die Obergehänge (28) an einer in Längsrichtung des Backofens (1) umlaufenden Transportkette ( ) befestigt sind und in Querrichtung des Backofens (1) horizontal ausgerichtete Tragelemente für den Eingriff mit den Tragelementen der Untergehänge (25) besitzen.

4. Backofen nach Anspruch 3, **dadurch gekennzeichnet, daß** der obere Förderer (3) zwei Scharen von in Längsrichtung des Backofens (1) parallel zueinander umlaufenden Gehängen (26) besitzt und jede Gehängeschar an einer, in einer vertikalen Ebene umlaufenden, endlosen Transportkette ( ) befestigt ist.

5. Backofen nach Anspruch 2, **dadurch gekennzeichnet, daß** der obere Förderer (3) zwei Scharen von in Längsrichtung des Backofens (1) parallel zueinander umlaufenden Gehängen (26) besitzt, deren Untergehänge (25) an den oberen Backplatten (9) befestigt sind und deren Obergehänge (28) an in Querrichtung des Backofens (1) horizontal ausgerichteten Tragstangen (29) angebracht sind, die an seitlichen Transportketten (31) befestigt sind, die jeweils in einer vertikalen Ebene in Längsrichtung des Backofens (1) umlaufen.

6. Backofen nach einem der Ansprüche 2-5, **dadurch gekennzeichnet, daß** die Tragelemente der Obergehänge als horizontal ausgerichtete Tragbolzen ausgebildet sind, die von den Tragelementen der Untergehänge von oben übergriffen werden.

7. Backofen nach einem der Ansprüche 2-5, **dadurch gekennzeichnet, daß** das Untergehänge (25) eine vertikal ausgerichtete Tragplatte (23) besitzt, in der eine seitlich offene Ausnehmung (27) vorgesehen ist, an deren oberer Ausbuchtung das Tragelement des Untergehänges (25) angeordnet ist, und daß das Tragelement des Obergehänges (28) als horizontal ausgerichteter Tragbolzen ausgebildet ist, der mit vertikalem Bewegungsspiel in der seitlich offenen Ausnehmung (27) des Untergehänges (25) aufgenommen ist.

8. Backofen nach einem der Ansprüche 2-5, **dadurch gekennzeichnet, daß** das Tragelement des Untergehänges als horizontal ausgerichteter Tragbolzen ausgebildet ist, der mit vertikalem Bewegungsspiel in einer seitlich offenen Ausnehmung des Obergehänges aufgenommen ist, und das Obergehänge eine vertikal ausgerichtete Tragplatte besitzt, in der eine seitlich offene Ausnehmung vorgesehen ist, an deren unterer Ausbuchtung das Tragelement des Obergehänges angeordnet ist.

9. Backofen nach einem der Ansprüche 1-8, **dadurch gekennzeichnet, daß** die Ausrichtelemente (13) der oberen Backplatten (9) als in Querrichtung des Backofens (1) horizontal ausgerichtete Ausrichtbolzen (21) ausgebildet sind, die beim Absenken der oberen Backplatten (9) in die mit Einführschrägen (20) versehenen, vertikale ausgerichteten Aufnahmeschlitze (19) der Ausrichtelemente (14) der unteren Backplatten (7) eingreifen.

## Claims

1. A baking oven (1) for producing baked shaped bodies, having an input station (4), an output station (5), an elongate baking space, a baking section (6) leading from the input station (4) through the baking space to the output station (5), and having top and bottom baking sheets (7, 9) revolving in opposite directions in separate paths of revolution in the longitudinal direction of the baking oven (1), which baking sheets move through the baking section (6) in the same direction and in so doing, lying on top of one another in pairs, form the baking moulds for the shaped bodies to be baked, **characterised in that** a baking section (6) extending in one plane from the input station (4) to the output station (5) is provided, **in that** the baking moulds each comprise a bottom baking sheet (7) and, placed on the top side thereof, a top baking sheet (9), **in that** a lower conveyor (2) extending along the path of revolution of the bottom baking sheets (7) and carrying the bottom baking sheets (7) is arranged below the plane of the baking section, which lower conveyor transports the baking moulds from the input station (4) through the baking section (6) to the output station (5), **in that** an upper conveyor (3, 32) extending along the path of revolution of the top baking sheets (9, 37) is provided above the plane of the baking section, which upper conveyor transports the top baking sheets (9, 37) suspended, substantially horizontally aligned and with their baking surfaces (10, 37a) always facing downwards, wherein at the start of the baking section (6) the upper conveyor (3) sets down the substantially horizontally aligned top baking sheets (9) on the bottom baking sheets (7) to form the baking moulds and lifts them off the bottom baking sheets (7) again at the output station (5) to open the baking moulds, and **in that** the top and bottom baking sheets (7, 9) carry mutually associated aligning elements (13, 14), which come into engagement when a top baking sheet (9) is placed on a bottom baking sheet (7) and align the top baking sheet (9) as it is being placed on the bottom baking sheet (7) lying beneath it.

2. A baking oven according to claim 1, **characterised in that** the upper conveyor (3) has hangers (26) revolving in the longitudinal direction of the baking oven (1) for the top baking sheets (9), **in that** the hangers (26) each comprise an upper hanger (28) and a lower hanger (25) loosely coupled therewith, wherein the upper hangers (28) revolve along an inherently closed path in the longitudinal direction of the baking oven (1) and the lower hangers (25) are secured to the top baking sheets (9), and **in that** the path of revolution of the upper hangers (28) along the baking section (6) drops towards the bottom baking sheets (7), wherein the respective lower hangers (25) of top baking sheets (9) that have been set down on the bottom baking sheets (7) are lifted off the upper hangers (28).

3. A baking oven according to claim 2, **characterised in that** the upper hangers (28) are secured to a transport chain revolving in the longitudinal direction of the baking oven (1) and have bearing elements aligned horizontally in the transverse direction of the baking oven (1) for engagement with the bearing elements of the lower hangers (25).

4. A baking oven according to claim 3, **characterised in that** the upper conveyor (3) has two sets of hangers (26) revolving parallel to one another in the longitudinal direction of the baking oven (1) and each set of hangers is secured to a continuous transport chain revolving in a vertical plane.

5. A baking oven according to claim 2, **characterised in that** the upper conveyor (3) has two sets of hangers (26) revolving parallel to one another in the longitudinal direction of the baking oven (1), the lower hangers (25) of which hangers are secured to the top baking sheets (9) and the upper hangers (28) of which hangers are mounted on bearing bars (29) aligned horizontally in the transverse direction of the baking oven (1), which bearing bars are secured to lateral transport chains (31) that each revolve in a vertical plane in the longitudinal direction of the baking oven (1).

6. A baking oven according to any one of claims 2 to 5, **characterised in that** the bearing elements of the upper hangers are in the form of horizontally aligned bearing bolts, over which the bearing elements of the lower hangers engage from above.

7. A baking oven according to any one of claims 2 to 5, **characterised in that** the lower hanger (25) has a vertically aligned bearing plate (23) in which there is provided a laterally open recess (27), at the upper protrusion of which recess the bearing element of the lower hanger (25) is arranged, and **in that** the bearing element of the upper hanger (28) is in the form of a horizontally aligned bearing bolt that is received with vertical play in the laterally open recess (27) of the lower hanger (25).

8. A baking oven according to any one of claims 2 to 5, **characterised in that** the bearing element of the lower hanger is in the form of a horizontally aligned bearing bolt that is received with vertical play in a laterally open recess of the upper hanger, and the upper hanger has a vertically aligned bearing plate in which there is provided a laterally open recess, at the upper protrusion of which recess the bearing element of the upper hanger is arranged.

9. A baking oven according to any one of claims 1 to 8, **characterised in that** the aligning elements (13) of the top baking sheets (9) are in the form of aligning bolts (21) aligned horizontally in the transverse direction of the baking oven (1), which, as the top baking sheets (9) are lowered, engage in vertically aligned receiving slots (19), with insertion slopes (20), of the aligning elements (14) of the bottom baking sheets (7).

## Revendications

1. Four de cuisson (1) pour la préparation de corps moulés cuits comprenant un poste d'introduction (4), un poste de sortie (5), une chambre de cuisson allongée, une ligne de cuisson (6) s'étendant dans la chambre de cuisson entre le poste d'introduction (4) et le poste de sortie (5) et des plateaux de cuisson supérieurs et inférieurs (7, 9) entraînés en sens contraire par des bandes enroulées en boucle séparées s'étendant dans la direction de la longueur du four de cuisson (1) et parcourant la ligne de cuisson (6) dans la même direction et qui constituent les moules des corps moulés à cuire situés par paires les uns sur les autres, **caractérisé en ce qu'**il est prévu une ligne de cuisson (6) qui s'étend dans un plan entre le poste d'introduction (4) et le poste de sortie (5), **en ce que** les moules de cuisson sont constitués chacun par un plateau de cuisson inférieur (7) et par un plateau de cuisson supérieur (9) déposé sur son côté supérieur, **en ce qu'**en dessous du plan de la ligne de cuisson est disposé un convoyeur inférieur (2), portant les plateaux de cuisson inférieurs (7), qui s'étend le long de la bande enroulée en boucle des plateaux de cuisson inférieurs (7) qui transporte les moules de cuisson depuis le poste d'introduction (4) jusqu'au poste de sortie (5) à travers la ligne de cuisson (6), **en ce qu'**au-dessus du plan de la ligne de cuisson est prévu un convoyeur supérieur (3, 32) qui s'étend le long de la bande enroulée en boucle des plateaux de cuisson supérieurs (9, 37) qui transporte chacun des plateaux de cuisson supérieurs (9, 37) à l'état suspendu, dirigés sensiblement horizontalement et avec leur surface de cuisson (10, 37a) dirigée continuellement vers le bas, le convoyeur supérieur (3) déposant les plateaux de cuisson supérieurs (9), agencés de façon sensiblement horizontale, sur les plateaux de cuisson inférieurs (7) au début de la ligne de cuisson (6) pour former les moules de cuisson et les soulevant de nouveau des plateaux de cuisson inférieurs (7) au poste de sortie (5) pour libérer les corps moulés cuits et **en ce que** les plateaux supérieurs et inférieurs (7, 9) portent des éléments d'alignement (13, 14) disposés en opposition l'un par rapport à l'autre qui, lors du dépôt d'un plateau de cuisson supérieur (9) sur un plateau de cuisson inférieur (7), viennent en prise et alignent les plateaux de cuisson supérieurs (9) lors de leur dépôt sur les plateaux de cuisson inférieurs (7) situés sous eux.

2. Four de cuisson selon la revendication 1, **caractérisé en ce que** le convoyeur supérieur (3) présente, dans la direction de la longueur du four de cuisson (1), une suspension (26) pour les plateaux de cuisson supérieurs (9), **en ce que** la suspension (26) comprend une suspension supérieure (28) et une suspension inférieure (25) reliée librement à celle-ci, la suspension supérieure (28) est fixée le long d'un trajet fermé s'étendant dans la direction du four de cuisson (1) et la suspension inférieure (25) est fixée aux plateaux de cuisson supérieurs (9) et **en ce que** le trajet de la suspension supérieure (28) le long de la ligne de cuisson (6) vers les plateaux de cuisson inférieurs (7) est incliné vers le bas, de sorte que lorsque les plateaux de cuisson supérieurs (9) sont déposés sur les plateaux de cuisson inférieurs (7) chaque fois la suspension inférieure (25) est décrochée de la suspension supérieure (28).

3. Four de cuisson selon la revendication 2, **caractérisé en ce que** la suspension supérieure (28) est fixée dans la direction de la longueur du four de cuisson (1) à une chaîne de transport et présente, dans la direction transversale du four de cuisson (1), des éléments de support alignés horizontalement pour venir en prise avec des éléments de support de la suspension inférieure (25).

4. Four de cuisson selon la revendication 3, **caractérisé en ce que** le convoyeur supérieur (3) comporte deux groupes de suspensions (26) s'étendant parallèlement l'un de l'autre dans la direction de la longueur du four de cuisson (1) et chaque groupe de suspensions est fixé à une chaîne de transport sans fin s'étendant dans un plan vertical.

5. Four de cuisson selon la revendication 2, **caractérisé en ce que** le convoyeur supérieur (3) comporte deux groupes de suspensions (26) s'étendant parallèlement l'un de l'autre dans la direction de la longueur du four de cuisson (1), dont la suspension inférieure (25) est fixée aux plateaux de cuisson supérieurs (28) et dont la suspension supérieure (28) est solidaire de tiges de support (29) alignées horizontalement, transversalement à la direction du four de cuisson (1) qui sont fixées à des chaînes latérales de transport (31), qui s'étendent chacune dans un plan vertical dans la direction de la longueur du four de cuisson (1).

6. Four de cuisson selon l'une des revendications 2-5, **caractérisé en ce que** les éléments de support de la suspension supérieure sont constitués par des boulons de support alignés horizontalement qui viennent en prise avec les éléments de support de la suspension inférieure.

7. Four de cuisson selon l'une des revendications 2-5, **caractérisé en ce que** la suspension inférieure (25) présente une plaque de support (23) alignée verticalement, dans laquelle est prévu un évidement (27) ouvert latéralement, l'élément de support de la suspension inférieure (25) étant disposé à son rebord supérieur et **en ce que** l'élément de support de la suspension supérieure (28) est constitué par un boulon de support aligné horizontalement, qui est engagé avec un jeu de déplacement vertical dans l'évidement (27) ouvert latéralement de la suspension inférieure (25).

8. Four de cuisson selon l'une des revendications 2-5, **caractérisé en ce que** l'élément de support de la suspension inférieure est constitué par un boulon de support aligné horizontalement, qui est engagé avec un jeu de déplacement vertical dans un évidement latéral ouvert de la suspension supérieure, et la suspension supérieure présente une plaque de support s'étendant verticalement dans laquelle est prévu un évidement latéral ouvert, l'élément de support étant disposé au rebord inférieur de cet évidement.

9. Four de cuisson selon l'une des revendications 1-8, **caractérisé en ce que** l'élément d'alignement (13) des plateaux de cuisson supérieurs (9) est constitué par des boulons d'alignement (21) alignés horizontalement dans la direction transversale du four de cuisson (1), qui viennent en prise, lors du dépôt des plateaux de cuisson supérieurs (9), avec des fentes de réception (19) présentant des pentes d'engagement prévues sur les éléments d'alignement (14) des plaques de cuisson inférieurs (7).
